# EUROPÄISCHE PATENTSCHRIFT

(11) **EP 2 736 777 B1**
(45) Veröffentlichungstag und Bekanntmachung des Hinweises auf die Patenterteilung: **30.12.2015**
(21) Anmeldenummer: 11735888.7
(22) Anmeldetag: 27.07.2011
(51) Int. Cl.: B60S 3/04

(54) **FAHRZEUGWASCHANLAGE**
VEHICLE WASHING INSTALLATION
INSTALLATION DE LAVAGE POUR VÉHICULES

(43) Veröffentlichungstag der Anmeldung: 04.06.2014
(73) Patentinhaber: Alfred Kärcher GmbH & Co. KG, 71364 Winnenden (DE)
(72) Erfinder: HEINZE, Michael, 71282 Hemmingen (DE); FEISTKORN, Ingo, 71364 Winnenden (DE); VEITZ, Yann, 71665 Vaihingen/Enz (DE); HEID, Claus, 70186 Stuttgart (DE); SPECKMAIER, André, 71543 Wüstenrot (DE)
(74) Vertreter: Hoeger, Stellrecht & Partner Patentanwälte mbB
(86) Internationale Anmeldenummer: PCT/EP2011/062951
(87) Internationale Veröffentlichungsnummer: WO 2013/013715

(56) Entgegenhaltungen:
- FR-A1- 2 765 538
- US-A1- 2004 065 349
- US-A1- 2010 206 961

## Beschreibung

Die Erfindung betrifft eine Fahrzeugwaschanlage mit den Merkmalen des Oberbegriffes von Patentanspruch 1.

Fahrzeugwaschanlagen mit zwei Ständern, an denen ein Düsenbalken mit einer Vielzahl von Hochdruckdüsen höhenverstellbar gehalten ist, kommen insbesondere für Nutzfahrzeuge zum Einsatz, zum Beispiel für Lastkraftwagen und Sonderfahrzeuge. Mit Hilfe von Hochdruckdüsen, die mit einer unter Druck stehenden Reinigungsflüssigkeit, beispielsweise mit Wasser, beaufschlagt werden können, kann unter Druck stehende Reinigungsflüssigkeit auf die Fahrzeuge gerichtet werden. Die Hochdruckdüsen können beispielsweise als Flach- oder Punktstrahldüsen ausgebildet sein oder auch als Sprühdüsen. Der Düsenbalken ist an den Ständern höhenverstellbar gehalten, so dass er der Kontur eines zu reinigenden Fahrzeuges folgen und einen geringen Abstand zum Fahrzeug einnehmen kann. Dadurch wird die Reinigungswirkung verstärkt.

Es kann vorgesehen sein, dass das Fahrzeug relativ zur Fahrzeugwaschanlage verfahrbar ist. Alternativ kann vorgesehen sein, dass die Fahrzeugwaschanlage relativ zum stehenden Fahrzeug verfahren werden kann. Insbesondere kann vorgesehen sein, dass die Fahrzeugwaschanlage in Form einer Portalwaschanlage ausgestaltet ist, die zwei Ständer aufweist, welche über eine Traverse starr miteinander verbunden sind.

Aus der US 2004/0065349 A1 ist eine Fahrzeugwaschanlage mit den Merkmalen des Oberbegriffes von Patentanspruch 1 bekannt. Die Fahrzeugwäschanlage weist einen an Ständern höhenverstellbar gehaltenen Düsenbalken mit einer Vielzahl von Hochdruckdüsen auf. Der Düsenbalken ist von einem Schutzkörper umgeben, der sich entlang des Düsenbalkens erstreckt und eine Austrittsöffnung für Reinigungsflüssigkeit aufweist. Der Schutzkörper kann zusammen mit dem Düsenbalken in der Höhe verstellt werden.

Bei der Reinigung des Fahrzeuges muss darauf geachtet werden, dass der höhenverstellbare Düsenbalken nicht mit Teilen des Fahrzeuges kollidiert. Hierzu kommt üblicherweise eine Lichtschranke zum Einsatz, die in Verstellrichtung des Düsenbalkens vor dem Düsenbalken angeordnet ist. Die Lichtschranke ist quer zur Längsrichtung des Fahrzeuges ausgerichtet. Wird die Lichtschranke unterbrochen, so wird die Bewegung des Düsenbalkens gestoppt, um eine Beschädigung des Düsenbalkens und vor allem eine Beschädigung des Fahrzeuges zu vermeiden. Derartige Lichtschranken haben allerdings den Nachteil, dass strahlungsdurchlässige Fahrzeugteile nicht erkannt werden können. Auch Fahrzeugteile oder Fahrzeugaufbauten, die die Lichtschranke nur sehr kurzzeitig unterbrechen, können in vielen Fällen nur unzureichend erkannt werden. Werden mittels der Fahrzeugwaschanlage Baufahrzeuge gereinigt, so besteht die Gefahr, dass beispielsweise Gitteraufbauten des Fahrzeuges oder auch ein versehentlich am Fahrzeug zurückgelassener und vom Fahrzeug abstehender Stiel einer Schaufel von der Lichtschranke nicht erkannt wird und daher der Düsenbalken mit dem gitterförmigen Aufbau oder dem Stiel der Schaufel kollidiert.

Aufgabe der vorliegenden Erfindung ist es, eine Fahrzeugwaschanlage der eingangs genannten Art derart weiterzubilden, dass die Gefahr einer Kollision des Düsenbalkens mit einem Hindernis verringert werden kann.

Diese Aufgabe wird durch eine Fahrzeugwaschanlage mit den Merkmalen von Patentanspruch 1 gelöst.

Bei der erfindungsgemäßen Fahrzeügwaschanlage ist der Düsenbalken von einem Schutzkörper umgeben. Der Schutzkörper umgibt den Düsenbalken in Umfangsrichtung, wobei er eine Austrittsöffnung aufweist, so dass die von den Hochdruckdüsen des Düsenbalkens abgegebene Reinigungsflüssigkeit aus dem Schutzkörper heraustreten und auf die zu reinigende Oberfläche des Fahrzeugges auftreffen kann. Der Schutzkörper ist zusammen mit dem Düsenbalken in der Höhe verstellbar. Der Schutzkörper kann somit in gleicher Weise wie der Düsenbalken bewegt werden. Der Düsenbalken ist innerhalb des Schutzkörpers angeordnet. Nähert sich der Düsenbalken einem Hindernis, beispielsweise einem Fahrzeugaufbau, in unzulässiger Weise, so trifft der Schutzkörper auf das Hindernis bevor der Düsenbalken das Hindernis erreicht. Der Schutzkörper wird dadurch aus einer Grundstellung relativ zum Düsenbalken bewegt und diese Relativbewegung wird von einer Sensoranordnung erfasst. Die Sensoranordnung stellt dann ein Steuersignal bereit, so dass die Bewegung des Düsenbalkens gestoppt werden kann, bevor es zu einer Kollision des Düsenbalkens mit dem Hindernis kommt.

Da der Schutzkörper den Düsenbalken in Umfangsrichtung so weit umgibt, dass nur noch eine Austrittsöffnung für die Reinigungsflüssigkeit frei bleibt, ist sichergestellt, dass Hindernisse jeder Art, insbesondere auch strahlungsdurchlässige Fahrzeugteile und auch sehr schmale Gegenstände, beispielsweise der Stiel einer Schaufel, zuverlässig erkannt werden können, indem sie zu einer Relativbewegung des Schutzkörpers führen, sobald der relativ zum Düsenbalken bewegbare Schutzkörper gegen das Hindernis stößt.

Der Schutzkörper erstreckt sich entlang des Düsenbalkens, d. h. er verläuft quer zur Fahrzeuglängsrichtung und erstreckt sich über das gesamte Fahrzeug. Mittels des Schutzkörpers lassen sich daher nicht nur an bestimmten Stellen des Düsenbalkens Hindernisse erkennen sondern die Hindernisse werden über die gesamte Fahrzeugbreite zuverlässig erkannt. Der Schutzkörper bildet somit ein mechanisches Kontaktelement, das ein Hindernis bei einer unzulässigen Annäherung an den Düsenbalken erkennt. Aufgrund der Relativbewegung des Schutzkörpers wird ein Steuersignal ausgelöst, unter dessen Wirkung die Bewegung des Düsenbalkens gestoppt und vorzugsweise umgekehrt werden kann. Der Düsenbalken kann dem Hindernis rechtzeitig auszuweichen, bevor er auf den Düsenbalken trifft.

Damit die von den Hochdruckdüsen ausgehende Reinigungsflüssigkeit in unterschiedlicher Richtung auf das Fahrzeug gerichtet werden kann, ist der Düsenbalken bevorzugt zusammen mit dem Schutzkörper um eine horizontale Schwenkachse schwenkbar. Dies gibt beispielsweise die Möglichkeit, den Düsenbalken im Bereich einer Windschutzscheibe des zu reinigenden Fahrzeuges zu verschwenken, so dass die Reinigungsflüssigkeit schräg zur Vertikalen ausgerichtet werden kann.

Von Vorteil ist es, wenn der Schutzkörper hohlzylindrisch ausgestaltet und vom Düsenbalken durchgriffen ist. Insbesondere eine kreiszylindrische Ausgestaltung des Schutzkörpers hat sich als vorteilhaft erwiesen. Die Zylinderachse des Schutzkörpers verläuft bevorzugt kolinear zu einer Schwenkachse des Düsenbalkens.

Der Schutzkörper weist bei einer vorteilhaften Ausführungsform der Erfindung eine den Düsenbalken in Umfangsrichtung mit Ausnahme der mindestens einen Austrittsöffnung vollständig umgebende Schutzhülle auf. Die Schutzhülle kann beispielsweise die Mantelfläche eines Hohlzylinders ausbilden, der den Düsenbalken umgibt.

Günstig ist es, wenn die Schutzhülle aus einem Flachmaterial gefertigt ist, insbesondere aus einem starren Flachmaterial. Es kann beispielsweise vorgesehen sein, dass die Schutzhülle aus einem feinmaschigen Gittermaterial gebildet ist. Die Maschenweite beträgt vorzugsweise maximal 5 mm, insbesondere maximal 3 mm. Von besonderem Vorteil ist es, wenn die Schutzhülle aus einem geschlossenen Flachmaterial gefertigt ist, denn dadurch ist sichergestellt, dass auch sehr schmale Hindernisse beim Auftreffen auf die Schutzhülle zu einer Bewegung des Schutzkörpers relativ zum Düsenbalken führen.

Bevorzugt ist die Schutzhülle aus einem Kunststoffmaterial gefertigt. Dies hat den Vorteil, dass der Schutzkörper ein sehr geringes Gewicht aufweist und daher beim Auftreffen auf ein Hindernis zuverlässig eine Bewegung relativ zum Düsenbalken ausführt. Wie bereits erwähnt, kann die Relativbewegung von einer Sensoranordnung erfasst werden, um ein Steuersignal bereitzustellen, unter dessen Wirkung die Bewegung des Düsenbalkens gestoppt werden kann. Günstigerweise umfasst der Schutzkörper eine Tragstruktur, an der die Schutzhülle festgelegt ist. Die Tragstruktur kann skelettartig ausgestaltet sein und eine Verstrebung ausbilden, die dem Schutzkörper eine hohe mechanische Stabilität verleiht und darüber hinaus sicherstellt, dass der Schutzkörper sich beim Auftreffen auf ein Hindernis praktisch nicht verformt sondern eine Bewegung relativ zum Düsenbalken ausführt.

Bei einer vorteilhaften Ausführungsform der Erfindung umfasst die Tragstruktur des Schutzkörpers mindestens zwei starre Tragringe, die den Düsenbalken in Umfangsrichtung vollständig umgeben und die über Verbindungsstreben starr miteinander verbunden sind. Es kann beispielsweise vorgesehen sein, dass der Schutzkörper nach Art eines Hohlzylinders ausgebildet ist, der an seinen Stirnseiten jeweils einen in sich geschlossenen Tragring aufweist. Durch die beiden Tragringe, die über Verbindungsstreben starr miteinander verbunden sind, erhält der Schutzkörper eine hohe mechanische Stabilität, wobei gleichzeitig das Gewicht des Schutzkörpers sehr gering gehalten werden kann.

Die Verbindungsstreben sind günstigerweise parallel zur Schwenkachse des Düsenbalkens ausgerichtet.

Von Vorteil ist es, wenn die mindestens eine Austrittsöffnung zwischen zwei parallel zueinander ausgerichteten Verbindungsstreben angeordnet ist. Die beiden Verbindungsstreben können hierbei den Rand der Austrittsöffnung definieren.

Wie eingangs erwähnt, ist der Düsenbalken an den beiden Ständern höhenverstellbar und bevorzugt um eine Schwenkachse verschwenkbar gehalten. Hierzu kann an jedem Ständer eine Führungsanordnung vorgesehen sein, die längs des Ständers verstellbar ist und an der der Düsenbalken gehalten ist. Günstig ist es, wenn der Schutzkörper in der Grundstellung auf mindestens zwei Stützteilen lose aufliegt, die jeweils an einer Führungsanordnung des Düsenbalkens festgelegt sind. Die beiden Führungsanordnungen, die entlang der Ständer verstellbar sind, nehmen bei einer derartigen Ausgestaltung der Erfindung nicht nur den Düsenbalken zwischen sich auf sondern sie dienen zusätzlich auch der Festlegung von jeweils mindestens einem Stützteil. Auf den Stützteilen liegt der Schutzkörper lose auf. Er kann dadurch von den Führungsanordnungen zusammen mit dem Düsenbalken in der Höhe verstellt werden. Trifft der Schutzkörper auf ein Hindernis, so kann er sich relativ zum Düsenbalken bewegen. Bei Einsatz eines schwenkbaren Düsenbalkens kann der auf den Stützteilen lose aufliegende Schutzkörper zusammen mit dem Düsenbalken um dessen Schwenkachse verschwenkt werden.

Bevorzugt ist an den Ständern jeweils eine Führungsschiene festgelegt, entlang derer die Führungsanordnungen in vertikaler Richtung verschiebbar sind.

Vorteilhafterweise sind an jeder Führungsanordnung zwei Stützteile gehalten, auf denen der Schutzkörper lose aufliegt. Die beiden Stützteile können im Abstand zueinander auf gleicher Höhe angeordnet sein und den Schutzkörper in vertikaler Richtung abstützen. In seiner Grundstellung ruht der Schutzkörper im Bereich jedes Ständers auf zwei Stützteilen, die ebenso wie der Düsenbalken an einer Führungsanordnung festgelegt sind. Trifft der Schutzkörper auf ein Hindernis, so wird er vom Hindernis relativ zum Düsenbalken bewegt, wobei er sich von mindestens einem Stützteil entfernen kann, da er nunmehr vom Hindernis abgestützt wird. Bewegt sich anschließend der Schutzkörper zusammen mit dem Düsenbalken vom Hindernis weg, so nimmt er aufgrund seiner Gewichtskraft wieder seine ursprüngliche Grundstellung ein, in der er auf den Stützteilen lose aufliegt.

Bevorzugt sind die Stützteile als Stützrollen ausgebildet, die um parallel zur Schwenkachse des Düsenbalkens ausgerichtete Drehachsen drehbar sind. Dies verringert Reibungskräfte beim Verschwenken des Schutzkörpers zusammen mit dem Düsenbalken, da der Schutzkörper bei einer Schwenkbewegung auf den Stützrollen abrollen kann.

Beim Auftreffen auf ein Hindernis bewegt sich der Schutzkörper relativ zum Düsenbalken. Die Relativbewegung wird von einer Sensoranordnung erfasst.

Bei einer vorteilhaften Ausgestaltung weist die Sensoranordnung mindestens einen Näherungsschalter auf. Mit Hilfe derartiger Näherungsschalter kann eine Änderung der Lage des Schutzkörpers relativ zum Düsenbalken zuverlässig erkannt werden. Insbesondere berührungsfreie Näherungsschalter sind von Vorteil, beispielsweise induktive, kapazitive, magnetische oder elektromagnetische Näherungsschalter.

Bei einer bevorzugten Ausgestaltung wirkt der mindestens eine Näherungsschalter mit mindestens einem Anschlagelement zusammen, das vom Schutzkörper bei einer Bewegung aus der Grundstellung bewegbar ist. Bei einer derartigen Ausführungsform wird mit Hilfe des Näherungsschalters eine Bewegung eines Anschlagelementes erkannt, die wiederum durch eine Bewegung des Schutzkörpers relativ zum Düsenbalken hervorgerufen wird.

Vorteilhafterweise ist das Anschlagelement an der Führungsanordnung des Düsenbalkens bewegbar gehalten. Beispielsweise kann vorgesehen sein, dass das Anschlagelement schwenkbar oder verschiebbar an der Führungsanordnung gehalten ist. Wird der Schutzkörper beim Auftreffen auf ein Hindernis aus seiner Grundstellung bewegt, so führt dies auch zu einer Bewegung des Anschlagelementes, die vom Näherungsschalter erfasst wird, der mit dem Anschlagelement direkt oder indirekt zusammenwirkt.

Der Düsenbalken ist günstigerweise an zwei jeweils an einem Ständer höhenverstellbar gehaltenen Führungsanordnungen um eine Schwenkachse schwenkbar gelagert. Von Vorteil ist es, wenn an jeder Führungsanordnung mindestens ein Anschlagelement angeordnet ist, das vom Schutzkörper bei einer Bewegung aus der Grundstellung bewegbar ist. Bei einer derartigen Ausführungsform ist der Düsenbalken zwischen zwei Führungsanordnungen positioniert und an den Führungsanordnungen ist jeweils mindestens ein Anschlagelement angeordnet. Trifft der den Düsenbalken in Umfangsrichtung umgebende Schutzkörper auf ein Hindernis, so führt dies zu einer Bewegung des Schutzkörpers relativ zum Düsenbalken. Dies wiederum hat zur Folge, dass zumindest ein Anschlagelement seine Position relativ zu einem Näherungsschalter ändert. Die Positionsänderung wird vom Näherungsschalter vorzugsweise berührungslos erkannt, der daraufhin ein Steuersignal bereitstellt, unter dessen Wirkung die Bewegung des Düsenbalkens gestoppt und/oder umgekehrt werden kann, um eine Kollision mit dem Hindernis zu vermeiden.

Bevorzugt sind an jeder Führungsanordnung zwei Anschlagelemente angeordnet, die über eine Schwenkmechanik mit einem Näherungsschalter zusammenwirken.

Es kann vorgesehen sein, dass an jeder Führungsanordnung ein einziger Näherungsschalter angeordnet ist, dem zwei Anschlagelemente zugeordnet sind.

Bei einer besonders bevorzugten Ausgestaltung ist am Düsenbalken mindestens ein Mitnehmer festgelegt, über den der Düsenbalken mit dem Schutzkörper verbunden ist. Über den Mitnehmer kann eine Schwenkbewegung des Düsenbalkens auf den Schutzkörper übertragen werden, so dass beim Verschwenken des Düsenbalkens auch der Schutzkörper eine Schwenkbewegung um die Schwenkachse des Düsenbalkens ausführt und dadurch die Lage der mindestens einen Austrittsöffnung des Schutzkörpers relativ zu den Hochdruckdüsen auch bei einer Schwenkbewegung des Düsenbalkens beibehalten wird.

Um beim Auftreffen auf ein Hindernis eine Bewegung des Schutzkörpers relativ zum Düsenbalken zu ermöglichen, ist es von Vorteil, wenn der Schutzkörper beim Auftreffen auf ein Hindernis relativ zum Mitnehmer bewegbar ist. Insbesondere kann vorgesehen sein, dass der Mitnehmer als radial zur Schwenkachse des Düsenbalkens ausgerichtete Mitnehmerstange ausgebildet ist, die eine am Schutzkörper angeordnete Mitnehmeröffnung durchgreift. Dies gibt die Möglichkeit, den Schutzkörper beim Auftreffen auf ein Hindernis entlang der Mitnehmerstange zu bewegen.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer erfindungsgemäßen Fahrzeugwaschanlage;
- Figur 2:: eine perspektivische, teilweise aufgetrennte Darstellung eines von einem Schutzkörper umgebenen Düsenbalkens der Fahrzeugwaschanlage aus Figur 1, wobei der Schutzkörper eine Grundstellung einnimmt;
- Figur 3:: eine perspektivische Darstellung des vom Schutzkörper umgebenen Düsenbalkens entsprechend Figur 2, wobei eine Schutzhülle des Schutzkörpers ausgeblendet wurde;
- Figur 4:: eine weitere perspektivische Darstellung des vom Schutzkörper umgebenen Düsenbalkens der Fahrzeugwaschanlage aus Figur 1, wobei der Schutzkörper eine Grundstellung einnimmt;
- Figur 5:: eine perspektivische Darstellung des vom Schutzkörper umgebenen Düsenbalkens der Fahrzeugwaschanlage aus Figur 1, wobei eine Schutzhülle des Schutzkörpers ausgeblendet wurde und der Schutzkörper eine relativ zum Düsenbalken versetzte Stellung einnimmt, und
- Figur 6:: eine perspektivische Darstellung des vom Schutzkörper umgebenen Düsenbalkens der Fahrzeugwaschanlage aus Figur 1, wobei der Düsenbalken zusammen mit dem Schutzkörper eine um 90° verschwenkte Stellung einnimmt.

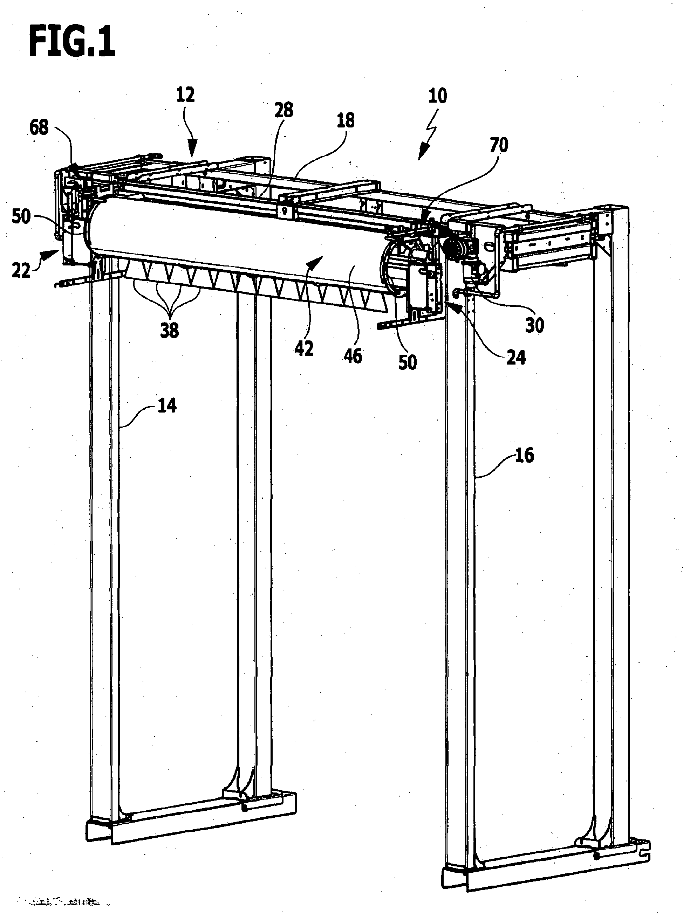

In Figur 1 ist schematisch eine erfindungsgemäße Fahrzeugwaschanlage 10 dargestellt mit einem Portal 12, das zwei vertikal ausgerichtete Ständer 14, 16 aufweist, die über eine horizontal ausgerichtete Traverse 18 miteinander verbunden sind. An den Ständern 14, 16 ist jeweils eine Führungsschiene 20 festgelegt, an der eine Führungsanordnung 22 bzw. 24 in vertikaler Richtung verschiebbar gehalten ist. Über eine horizontal verlaufende Kopplungsstange 26 sind die beiden Führungsanordnungen 22, 24 miteinander gekoppelt, so dass sie synchron entlang der Führungsschienen 20 der beiden Ständer 14, 16 verfahren werden können. Zur Höhenverstellung sind die Führungsanordnungen 22, 24 über Tragmittel 28, beispielsweise über einen Tragriemen, mit einem Antriebsmotor 30 verbunden. Der Antriebsmotor 30 ist am oberen Ende des Ständers 16 positioniert und steht mit einer an sich bekannten, in der Zeichnung nicht dargestellten Steuereinrichtung der Fahrzeugwaschanlage 10 in elektrischer Verbindung.

Die beiden Führungsanordnungen 22, 24 nehmen zwischen sich einen Düsenbalken 32 auf mit einer Rohrleitung 34, an der in gleichmäßigem Abstand zueinander eine Vielzahl von Hochdruckdüsen 36 angeordnet sind. In der dargestellten Ausführungsform sind die Hochdruckdüsen 36 als Flachstrahldüsen ausgebildet. Über die Rohrleitung 34 können die Hochdruckdüsen 36 mit unter Druck stehender Reinigungsflüssigkeit, insbesondere mit Wasser beaufschlagt werden, so däss sie jeweils einen Reinigungsflüssigkeitsstrahl 38 abgeben. Der Reinigungsflüssigkeitsstrahl 38 kann auf ein zu reinigendes Fahrzeug gerichtet werden, das zwischen den beiden Ständern 14, 16 positioniert werden kann. Zum Reinigen des Fahrzeuges kann das Portal 12 in bekannter Weise relativ zum Fahrzeug bewegt werden und entsprechend der Kontur des Fahrzeuges kann der Düsenbalken 32 von den Führungsanordnungen 22, 24 entlang der Ständer 14, 16 verfahren werden.

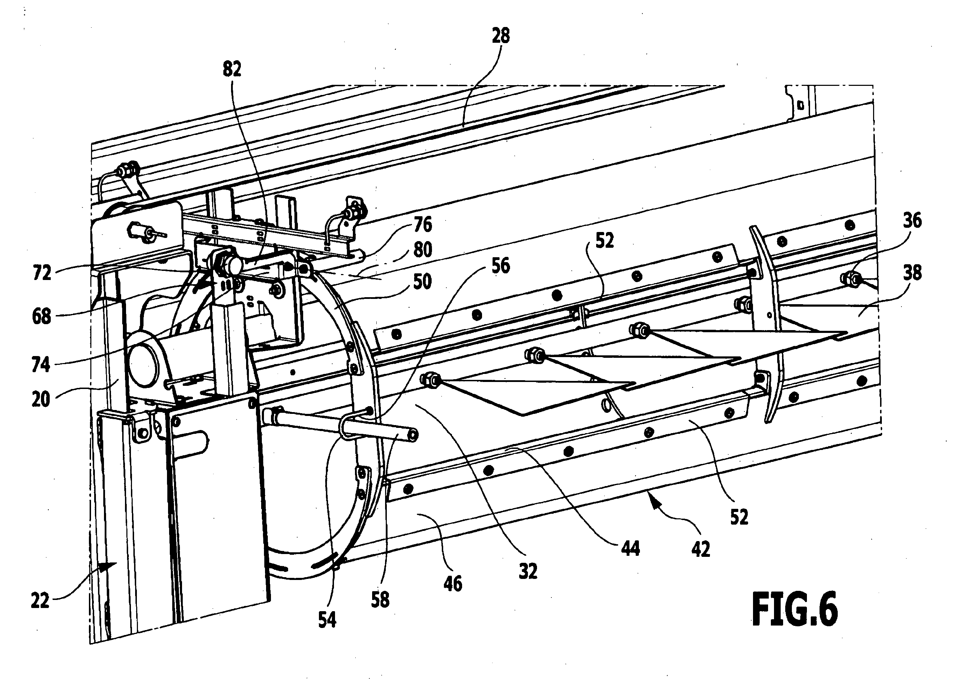

Der Düsenbalken 32 ist um seine Längsachse 40 verschwenkbar an den Führungsanordnungen 22, 24 gehalten. Dies gibt die Möglichkeit, die Reinigungsflüssigkeitsstrahlen 38 in unterschiedlicher Richtung abzugeben. In den Figuren 1 bis 5 ist der Düsenbalken 32 in einer Schwenkstellung dargestellt, in der die Reinigungsflüssigkeitsstrahlen 38 vertikal nach unten gerichtet sind. In Figur 6 ist der Düsenbalken 32 in einer um 90° verschwenkten Stellung dargestellt, in der die Reinigungsflüssigkeitsstrahlen 38 horizontal ausgerichtet sind.

Der Düsenbalken 32 ist in Umfangsrichtung von einem hohlzylindrischen Schutzkörper 42 umgeben, der den Düsenbalken 32 ebenso wie die Kopplungsstange 26 bis auf eine Austrittsöffnung 44 vollständig umgibt. Die Austrittsöffnung 44 ist bezogen auf die Reinigungsflüssigkeitsstrahlen 38 vor den Hochdruckdüsen 36 angeordnet, so dass die von den Hochdruckdüsen 36 abgegebene Reinigungsflüssigkeit aus dem Schutzkörper 42 heraustreten kann, um ein zu reinigendes Fahrzeug zu beaufschlagen.

Der Schutzkörper 42 weist eine aus einem Flachmaterial gefertigte Schutzhülle 46 auf, die an einer Tragstruktur 48 festgelegt ist. Die Schutzhülle 46 bildet ein geschlossenes Flächengebilde, das in der dargestellten Ausführungsform aus einem Kunststoffmaterial hergestellt ist.

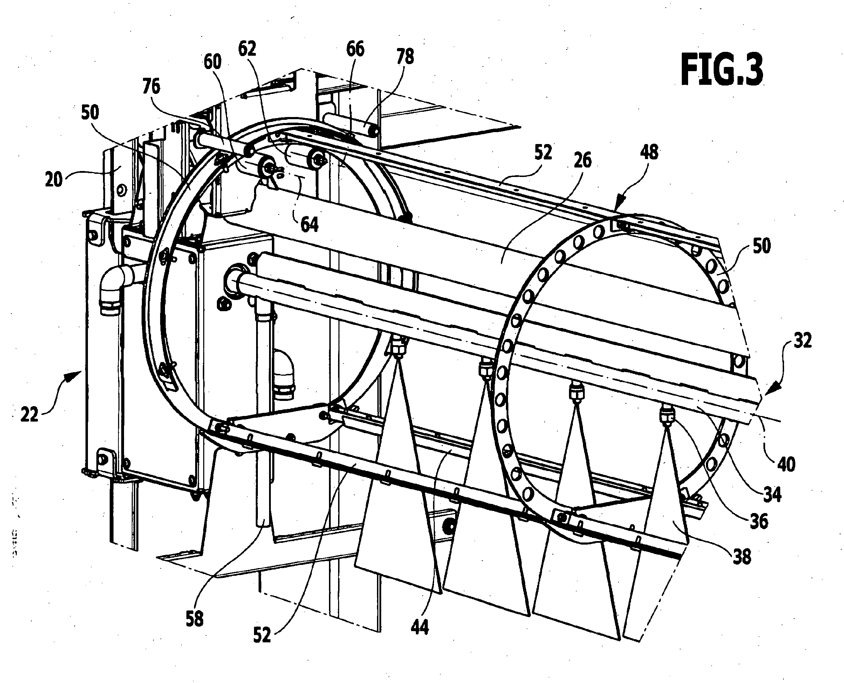

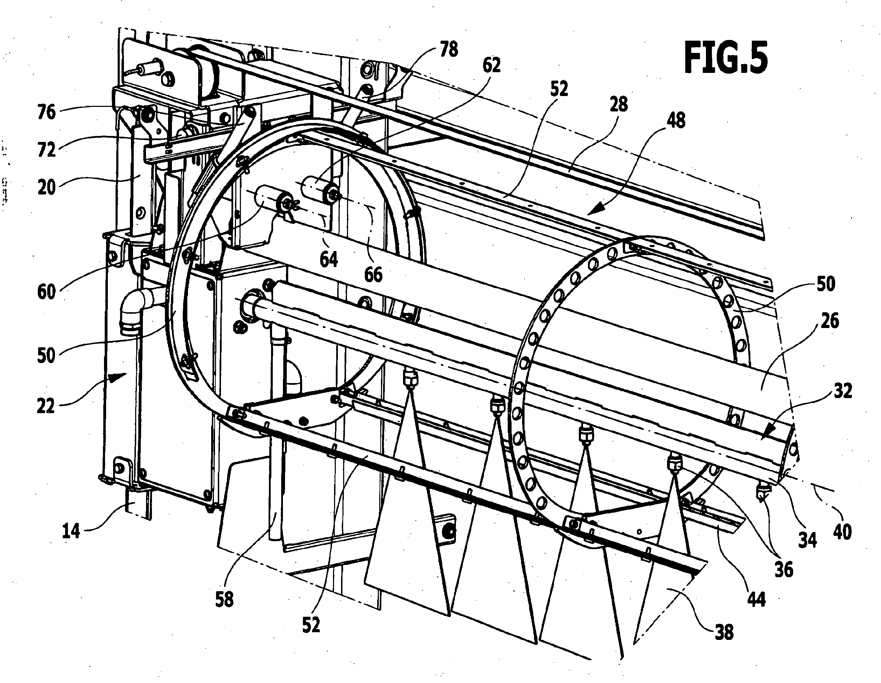

Wie insbesondere aus den Figuren 3 und 5 deutlich wird, umfasst die Tragstruktur 48 mehrere in sich geschlossene Tragringe 50, die über parallel zur Längsachse 40 des Düsenbalkens 32 ausgerichtete Verbindungsstreben 52 starr miteinander verbunden sind. Die Tragringe 50 verleihen der Tragstruktur 48 in Kombination mit den Verbindungsstreben 52 eine hohe mechanische Stabilität und stellen sicher, dass der Schutzkörper 42 eine hohe Steifigkeit aufweist und praktisch unverformbar ist.

Die Tragringe 50 sind jeweils in einer vertikal ausgerichteten Ebene angeordnet. Insbesondere weist der Schutzkörper 42 an seinen den Ständern 14, 16 zugewandten Stirnseiten jeweils einen Tragring 50 auf. An den jeweils einem Ständer 14, 16 zugewandten Außenseiten tragen die stirnseitigen Tragringe 50 jeweils einen U-förmigen Mitnehmerbügel 54, der eine Mitnehmeröffnung 56 definiert. Die Mitnehmeröffnung 56 wird von einem Mitnehmerstab 58 durchgriffen, der radial zur Längsachse 40 des Düsenbalkens 32 ausgerichtet am Düsenbalken 32 festgelegt ist. Über den Mitnehmerstab 58 wird eine Schwenkbewegung des Düsenbalkens 32 auf den Schutzkörper 42 übertragen.

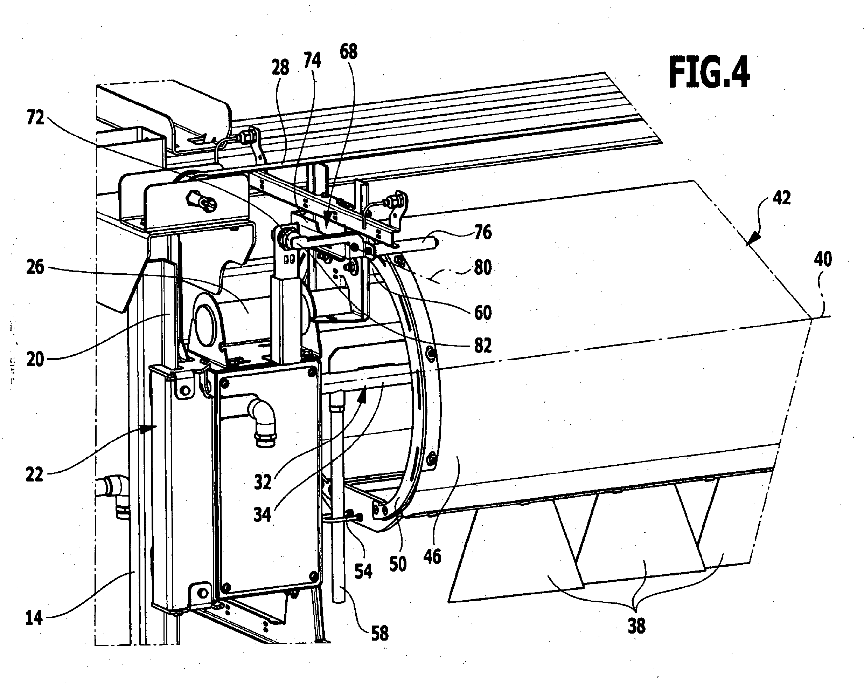

Wird der Düsenbalken 32 um die Längsachse 40 verschwenkt, so folgt der Schutzkörper 42 dieser Schwenkbewegung, so dass die Austrittsöffnung 44 eine gleich bleibende Lage relativ zu den Hochdruckdüsen 36 einnimmt. Dies wird insbesondere durch Vergleich der Figuren 4 und 6 deutlich.

In vertikaler Richtung abgestützt wird der Schutzkörper 42 an jeder Führungsanordnung 22, 24 mit Hilfe von zwei Stützelementen, die in Form von Stützrollen 60, 62 ausgestaltet sind. Die Stützrollen sind um parallel zur Längsachse 40 ausgerichtete Drehachsen 64 bzw. 66 frei drehbar und können zusammen mit dem Düsenbalken 32 in der Höhe verstellt werden. Die Stützrollen 60, 62 tauchen in die stirnseitigen Tragringe 50 der Tragstruktur 48 ein, so dass der Schutzkörper 42 auf den Stützrollen 60, 62 lose aufliegt. Wird der Schutzkörper 42 zusammen mit dem Düsenbalken 32 um die Längsachse 40 verschwenkt, so rollen sich die stirnseitigen Tragringe 50 der Tragstruktur 48 an den Stützrollen 60, 62 ab.

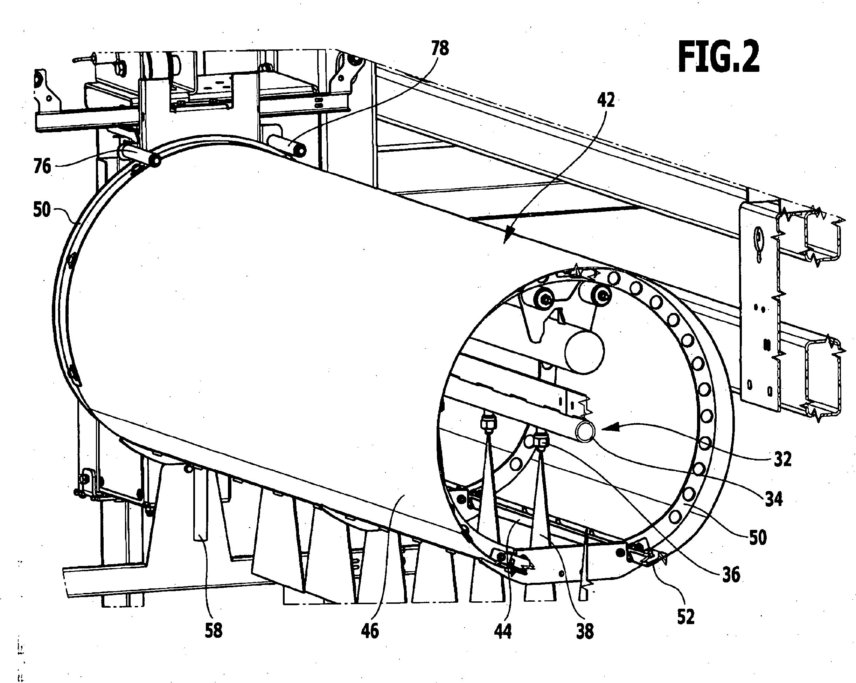

Trifft der Schutzkörper 42 beim Reinigen eines Fahrzeuges auf ein Hindernis, beispielsweise auf einen Fahrzeugaufbau, so kann er eine Bewegung relativ zum Düsenbalken 32 ausführen, wobei er von mindestens einer Stützrolle 60, 62 abheben kann. Um eine Bewegung des Schutzkörpers 42 relativ zum Düsenbalken 32 zu erfassen, umfasst die Fahrzeugwaschanlage 10 zwei identisch ausgestaltete Sensoranordnungen 68, 70, die jeweils an einer Führungsanordnung 22 bzw. 24 positioniert sind. Die Sensoranordnungen 68, 70 weisen jeweils einen Näherungsschalter 72 auf, der über eine Schwenkmechanik 74 mit einem ersten Anschlagelement 76 und einem zweiten Anschlagelement 78 gekoppelt ist. Die beiden Anschlagelemente 76, 78 sind zapfenförmig ausgebildet und parallel zur Längsachse 40 des Düsenbalkens 32 ausgerichtet. Ausgehend von ihrer in den Figuren 2, 3, 4 und 6 dargestellten Ruhelage können die Anschlagelemente 76, 78 entgegen der Rückstellkraft einer Feder um eine horizontal und senkrecht zur Längsachse 40 ausgerichtete Schwenkachse 80 der Schwenkmechanik 74 verschwenkt werden. Die Schwenkmechanik 74 umfasst einen Schwenkhebel 82, der mit den Anschlagelementen 76, 78 starr verbunden ist. In der Ruhelage der Anschlagelemente 76, 78 nimmt der Schwenkhebel 82 eine horizontal ausgerichtete Stellung ein, in der er mit seinem freien Ende unmittelbar vor dem Näherungsschalter 72 angeordnet ist. Bei einer Schwenkbewegung der Anschlagelemente 76, 78 ändert der Schwenkhebel 82 seine Position relativ zum Näherungsschalter 72. Die Positionsänderung des Schwenkhebels 82 wird vom Näherungsschalter 72 erkannt, der daraufhin ein Steuersignal bereitstellt, das der in der Zeichnung nicht dargestellten Steuereinrichtung der Fahrzeugwaschanlage 10 zur Verfügung gestellt wird.

Nähert sich der Düsenbalken 32 beim Reinigen eines Fahrzeuges einem Hindernis, beispielsweise einem Fahrzeugaufbau oder einem vom Fahrzeug abstehenden Werkzeug, das versehentlich am Fahrzeug verblieben ist, so trifft der Schutzkörper 42 auf das Hindernis noch bevor der Düsenbalken 32 das Hindernis erreichen kann. Das Auftreffen des Schutzkörpers auf das Hindernis hat zur Folge, dass der Schutzkörper relativ zum Düsenbalken 32 bewegt wird. Dies wiederum führt dazu, dass zumindest ein Anschlagelement 76, 78 um die Schwenkachse 80 verschwenkt wird und dadurch der Schwenkhebel 82 seine Position relativ zum Näherungsschalter 72 ändert. Diese Positionsänderung wird vom Näherungsschalter 72 erfasst, der daraufhin der Steuereinrichtung der Fahrzeugwaschanlage 10 ein Steuersignal bereitstellt. Dies führt dazu, dass die Bewegung des Düsenbalkens 32 und damit auch die Bewegung des Schutzkörpers 42 zunächst gestoppt und anschließend umgekehrt wird, so dass sich der Düsenbalken 32 zusammen mit dem Schutzkörper 42 vom Hindernis entfernt. Aufgrund seiner Gewichtskraft geht der Schutzkörper 42 bei der Entfernung vom Hindernis wieder in seine Grundstellung über, in der er auf den Stützrollen 60, 62 lose aufliegt.

Mittels des Schutzkörpers 42 kann somit eine Kollision des Düsenbalkens 32 mit einem Hindernis bei der Reinigung eines Fahrzeuges zuverlässig verhindert werden, und zwar auch dann, wenn das Hindernis strahlungsdurchlässig, insbesondere lichtdurchlässig ist und/oder eine sehr schmale Ausdehnung aufweist. Die vollflächige Ausgestaltung der Schutzhülle 46 stellt sicher, dass auch sehr schmale Hindernisse zuverlässig erkannt werden und zu einer Bewegung des Schutzkörpers 42 relativ zum Düsenbalken 32 führen, die von mindestens einer Sensoranordnung 68, 70 erfasst wird. Nach einer erfolgten Relativbewegung nimmt der Schutzkörper 32 beim Entfernen vom Hindernis selbsttätig wieder seine Grundstellung ein, ohne dass hierzu eine Rückstelleinrichtung erforderlich ist. Insbesondere kann eine Rückstellfeder entfallen. Dies hat den Vorteil, dass der Schutzkörper 42 in seiner Grundstellung nicht von einer Federkraft beaufschlagt wird und deshalb auch bei Einwirkung sehr geringer Kräfte, die bei einer Kollision von einem Hindernis auf den Schutzkörper 42 ausgeübt werden, relativ zum Düsenbalken bewegt wird.

## Patentansprüche

1. Fahrzeugwaschanlage (10) mit zwei Ständern (14, 16), an denen ein Düsenbalken (32) mit einer Vielzahl von Hochdruckdüsen (36) höhenverstellbar gehalten ist, wobei der Düsenbalken (32) von einem Schutzkörper (42) umgeben ist, der sich entlang des Düsenbalkens (32) erstreckt und mindestens eine Austrittsöffnung (44) für Reinigungsflüssigkeit aufweist und zusammen mit dem Düsenbalken (32) in der Höhe verstellbar ist, **dadurch gekennzeichnet, dass** der Schutzkörper (42) bei Auftreffen auf ein Hindernis relativ zum Düsenbalken (32) aus einer Grundstellung bewegbar ist, wobei die Bewegung des Schutzkörpers (42) relativ zum Düsenbalken (32) von mindestens einer Sensoranordnung (68, 70) erfassbar ist zur Bereitstellung eines Steuersignals.

2. Fahrzeugwaschanlage nach Anspruch 1, **dadurch gekennzeichnet, dass** der Schutzkörper (42) zusammen mit dem Düsenbalken (32) um eine horizontale Schwenkachse (40) schwenkbar ist.

3. Fahrzeugwaschanlage nach Anspruch 1 oder 2, **dadurch gekennzeichnet, dass** der Schutzkörper (42) hohlzylindrisch ausgestaltet und vom Düsenbalken (32) durchgriffen ist.

4. Fahrzeugwaschanlage nach Anspruch 1, 2 oder 3, **dadurch gekennzeichnet, dass** der Schutzkörper (42) eine den Düsenbalken (32) in Umfangsrichtung mit Ausnahme der mindestens einen Austrittsöffnung (44) vollständig umgebende Schutzhülle (46) aufweist.

5. Fahrzeugwaschanlage nach Anspruch 4, **dadurch gekennzeichnet, dass** die Schutzhülle (46) aus einem Flachmaterial gefertigt ist.

6. Fahrzeugwaschanlage nach Anspruch 4 oder 5, **dadurch gekennzeichnet, dass** der Schutzkörper (42) eine Tragstruktur (48) aufweist, an der die Schutzhülle (46) festgelegt ist.

7. Fahrzeugwaschanlage nach Anspruch 6, **dadurch gekennzeichnet, dass** die Tragstruktur (48) mindestens zwei starre Tragringe (50) umfasst, die den Düsenbalken (32) in Umfangsrichtung vollständig umgeben und die über Verbindungsstreben starr miteinander verbunden sind.

8. Fahrzeugwaschanlage nach einem der voran stehenden Ansprüche, **dadurch gekennzeichnet, dass** der Düsenbalken an zwei jeweils an einem Ständer (14, 16) höhenverstellbar gehaltenen Führungsanordnungen (22, 24) um eine Schwenkachse (40) schwenkbar gelagert ist, und dass der Schutzkörper (42) in seiner Grundstellung auf mindestens zwei Stützteilen (60, 62) lose aufliegt, die jeweils an einer Führungsanordnung (22, 24) festgelegt sind.

9. Fahrzeugwaschanlage nach Anspruch 8, **dadurch gekennzeichnet, dass** an jeder Führungsanordnung (22, 24) zwei Stützteile (60, 62) gehalten sind, auf denen der Schutzkörper (42) lose aufliegt.

10. Fahrzeugwaschanlage nach Anspruch 8 oder 9, **dadurch gekennzeichnet, dass** die Stützteile als Stützrollen (60, 62) ausgestaltet sind, die um eine parallel zur Schwenkachse (40) des Düsenbalkens (32) ausgerichtete Drehachse (64, 66) drehbar sind.

11. Fahrzeugwaschanlage nach einem der voran stehenden Ansprüche, **dadurch gekennzeichnet, dass** die mindestens eine Sensoranordnung (68, 70) zumindest einen Näherungsschalter (72) aufweist.

12. Fahrzeugwaschanlage nach Anspruch 11, **dadurch gekennzeichnet, dass** der Näherungsschalter (72) mit mindestens einem Anschlagelement (76, 78) zusammenwirkt, das vom Schutzkörper (42) bei einer Bewegung aus der Grundstellung bewegbar ist.

13. Fahrzeugwaschanlage nach Anspruch 12, **dadurch gekennzeichnet, dass** der Düsenbalken (32) an zwei jeweils an einem Ständer (14, 16) höhenverstellbar gehaltenen Führungsanordnungen (22, 24) um eine Schwenkachse (40) schwenkbar gelagert ist, und dass an jeder Führungsanordnung (22, 24) mindestens ein Anschlagelement (76, 78) angeordnet ist, das vom Schutzkörper (42) bei einer Bewegung aus der Grundstellung bewegbar ist.

14. Fahrzeugwaschanlage nach Anspruch 13, **dadurch gekennzeichnet, dass** an jeder Führungsanordnung (22, 24) zwei Anschlagelemente (76, 78) angeordnet sind, die über eine Schwenkmechanik (74) mit einem Näherungsschalter (72) zusammenwirken.

15. Fahrzeugwaschanlage nach einem der voran stehenden Ansprüche, **dadurch gekennzeichnet, dass** der Schutzkörper (42) über mindestens einen Mitnehmer (58) mit dem Düsenbalken (32) gekoppelt ist, wobei der mindestens eine Mitnehmer (58) am Düsenbalken (32) festgelegt ist.

16. Fahrzeugwaschanlage nach Anspruch 15, **dadurch gekennzeichnet, dass** der Mitnehmer als radial zur Schwenkachse (40) des Düsenbalkens (32) ausgerichtete Mitnehmerstange (58) ausgestaltet ist, die eine am Schutzkörper (42) angeordnete Mitnehmeröffnung (56) durchgreift.

## Claims

1. Vehicle washing installation (10) having two stands (14, 16) on which a nozzle beam (32) with a plurality of high-pressure nozzles (36) is held so as be adjustable in height, the nozzle beam (32) being surrounded by a protective body (42) which extends along the nozzle beam (32) and has at least one outlet opening (44) for cleaning liquid and is adjustable in height together with the nozzle beam (32), **characterized in that** the protective body (42) is movable out of a normal position relative to the nozzle beam (32) upon striking an obstacle, the movement of the protective body (42) relative to the nozzle beam (32) being detectable by at least one sensor assembly (68, 70) in order to provide a control signal.

2. Vehicle washing installation in accordance with claim 1, **characterized in that** the protective body (42) is pivotable together with the nozzle beam (32) about a horizontal pivot axis (40).

3. Vehicle washing installation in accordance with claim 1 or 2, **characterized in that** the protective body (42) is of hollow-cylindrical configuration and the nozzle beam (32) extends through the protective body (42).

4. Vehicle washing installation in accordance with claim 1, 2 or 3, **characterized in that** the protective body (42) comprises a protective covering (46) surrounding the nozzle beam (32) completely in the circumferential direction with the exception of the at least one outlet opening (44).

5. Vehicle washing installation in accordance with claim 4, **characterized in that** the protective covering (46) is produced from a flat material.

6. Vehicle washing installation in accordance with claim 4 or 5, **characterized in that** the protective body (42) comprises a support structure (48) to which the protective covering (46) is fixed.

7. Vehicle washing installation in accordance with claim 6, **characterized in that** the support structure (48) comprises at least two rigid support rings (50) which surround the nozzle beam (32) completely in the circumferential direction and which are rigidly connected to each other by connector struts.

8. Vehicle washing installation in accordance with any one of the preceding claims, **characterized in that** the nozzle beam is mounted for pivotal movement about a pivot axis (40) on two guide assemblies (22, 24), each of which is held so as to be adjustable in height on a stand (14, 16), and **in that** the protective body (42) rests loosely in its normal position on at least two support parts (60, 62) which are each fixed to a guide assembly (22, 24).

9. Vehicle washing installation in accordance with claim 8, **characterized in that** two support parts (60, 62) on which the protective body (42) rests loosely are held on each guide assembly (22, 24).

10. Vehicle washing installation in accordance with claim 8 or 9, **characterized in that** the support parts are configured as support rollers (60, 62) which are rotatable about an axis of rotation (64, 66) aligned parallel to the pivot axis (40) of the nozzle beam (32).

11. Vehicle washing installation in accordance with any one of the preceding claims, **characterized in that** the at least one sensor assembly (68, 70) comprises at least one proximity switch (72).

12. Vehicle washing installation in accordance with claim 11, **characterized in that** the proximity switch (72) interacts with at least one stop element (76, 78) which is movable by the protective body (42) upon movement out of the normal position.

13. Vehicle washing installation in accordance with claim 12, **characterized in that** the nozzle beam (32) is mounted for pivotal movement about a pivot axis (40) on two guide assemblies (22, 24), each of which is held so as to be adjustable in height on a stand (14, 16), and **in that** at least one stop element (76, 78) which is movable by the protective body (42) upon movement out of the normal position is arranged on each guide assembly (22, 24).

14. Vehicle washing installation in accordance with claim 13, **characterized in that** two stop elements (76, 78) which interact by way of a pivot mechanism (74) with a proximity switch (72) are arranged on each guide assembly (22, 24).

15. Vehicle washing installation in accordance with any one of the preceding claims, **characterized in that** the protective body (42) is coupled by way of at least one catch (58) to the nozzle beam (32), the at least one catch (58) being fixed to the nozzle beam (32).

16. Vehicle washing installation in accordance with claim 15, **characterized in that** the catch is configured as a catch bar (58) which is aligned radially in relation to the pivot axis (40) of the nozzle beam (32) and passes through a catch opening (56) arranged on the protective body (42).

## Revendications

1. Installation de lavage pour véhicules (10) comprenant deux montants (14, 16), lesquels supportent de manière réglable en hauteur une barre de pulvérisation (32) munie d'une pluralité de buses haute pression (36), la barre de pulvérisation (32) étant entourée d'un corps de protection (42), qui s'étend le long de la barre de pulvérisation (32) et qui comporte au moins un orifice de sortie (44) pour le liquide de lavage, et qui peut être réglé en hauteur conjointement avec la barre de pulvérisation (32), **caractérisée en ce que** le corps de protection (42) peut être déplacé par rapport à la barre de pulvérisation (32) à partir d'une position de base en cas de collision avec un obstacle, le mouvement du corps de protection (42) par rapport à la barre de pulvérisation (32) pouvant être détecté par au moins un système de détection (68, 70) afin de fournir un signal de commande.

2. Installation de lavage pour véhicules selon la revendication 1, **caractérisée en ce que** le corps de protection (42) peut être amené à pivoter conjointement avec la barre de pulvérisation (32) autour d'un axe de pivotement horizontal (40).

3. Installation de lavage pour véhicules selon la revendication 1 ou 2, **caractérisée en ce que** le corps de protection (42) est de forme cylindrique creuse et est traversé par la barre de pulvérisation (32).

4. Installation de lavage pour véhicules selon la revendication 1, 2 ou 3, **caractérisée en ce que** le corps de protection (42) comprend une enveloppe protectrice (46) entourant intégralement la barre de pulvérisation (32) dans la direction périphérique, à l'exception de l'orifice ou des orifices de sortie (44).

5. Installation de lavage pour véhicules selon la revendication 4, **caractérisée en ce que** l'enveloppe protectrice (46) est constituée d'un matériau plat.

6. Installation de lavage pour véhicules selon la revendication 4 ou 5, **caractérisée en ce que** le corps de protection (42) comprend une structure de support (48) sur laquelle est fixée l'enveloppe protectrice (46).

7. Installation de lavage pour véhicules selon la revendication 6, **caractérisée en ce que** la structure de support (48) comprend au moins deux bagues de support (50) rigides, qui entourent intégralement la barre de pulvérisation (32) dans la direction périphérique et qui sont reliées l'une à l'autre rigidement au moyen d'entretoises.

8. Installation de lavage pour véhicules selon l'une quelconque des revendications précédentes, **caractérisée en ce que** la barre de pulvérisation est montée sur deux ensembles de guidage (22, 24) retenus réglables en hauteur sur un montant (14, 16) de manière à pouvoir pivoter autour d'un axe de pivotement (40), et **en ce que** le corps de protection (42) repose de manière mobile dans sa position de base sur au moins deux parties d'appui (60, 62), qui sont fixées chacune sur un ensemble de guidage (22, 24).

9. Installation de lavage pour véhicules selon la revendication 8, **caractérisée en ce que** deux parties d'appui (60, 62), sur lesquelles le corps de protection (42) repose de manière mobile, sont retenues sur chaque ensemble de guidage (22, 24).

10. Installation de lavage pour véhicules selon la revendication 8 ou 9, **caractérisée en ce que** les parties d'appui sont réalisées sous la forme de rouleaux d'appui (60, 62), qui peuvent être amenés en rotation autour d'un axe de rotation (64, 66) orienté parallèlement à l'axe de pivotement (40) de la barre de pulvérisation (32).

11. Installation de lavage pour véhicules selon l'une quelconque des revendications précédentes, **caractérisée en ce que** le ou les systèmes de détection (68, 70) comprennent au moins un détecteur de proximité (72).

12. Installation de lavage pour véhicules selon la revendication 11, **caractérisée en ce que** le détecteur de proximité (72) coopère avec au moins un élément de butée (76, 78) qui peut être déplacé par le corps de protection (42) lorsque ce dernier se déplace à partir de la position de base.

13. Installation de lavage pour véhicules selon la revendication 12, **caractérisée en ce que** la barre de pulvérisation (32) est montée sur deux ensembles de guidage (22, 24) retenus réglables en hauteur respectivement sur un montant (14, 16) de manière à pouvoir pivoter autour d'un axe de pivotement (40), et **en ce qu'**au moins un élément de butée (76, 78), qui peut être déplacé par le corps de protection (42) lorsque ce dernier se déplace à partir de la position de base, est disposé sur chaque ensemble de guidage (22, 24).

14. Installation de lavage pour véhicules selon la revendication 13, **caractérisée en ce que** deux éléments de butée (76, 78), qui coopèrent avec un commutateur de proximité (72) par l'intermédiaire d'un mécanisme de pivotement (74), sont disposés sur chaque ensemble de guidage (22, 24).

15. Installation de lavage pour véhicules selon l'une quelconque des revendications précédentes, **caractérisée en ce que** le corps de protection (42) est accouplé à la barre de pulvérisation (32) au moyen d'au moins un entraîneur (58), l'entraîneur ou les entraîneurs (58) étant fixés à la barre de pulvérisation (32).

16. Installation de lavage pour véhicules selon la revendication 15, **caractérisée en ce que** l'entraîneur est réalisé sous la forme d'une tige d'entraînement (58) orientée radialement par rapport à l'axe de pivotement (40) de la barre de pulvérisation (32), laquelle tige traverse un orifice d'entraînement (56) disposé sur le corps de protection (42).
